# EUROPEAN PATENT SPECIFICATION

(11) **EP 1 808 634 B1**
(45) Date of publication and mention of the grant of the patent: **29.10.2008**
(21) Application number: 06000550.1
(22) Date of filing: 12.01.2006
(51) Int. Cl.: F16M 11/06

(54) **Fixture to mount a device**
Haltevorrichtung zur Montage eines Gerätes
Dispositif de fixation pour monter un appareil

(43) Date of publication of application: 18.07.2007
(73) Proprietor: Ondal Holding GmbH, 36088 Hünfeld (DE)
(72) Inventor: Kroenung, Karl, 36145 Hofbieber (DE); Sonntag, Rainer, 36166 Haunetal (DE)
(74) Representative: Graf von Stosch, Andreas

(56) References cited:
- EP-A- 1 283 969
- DE-A1- 4 321 726
- DE-U1- 29 905 420
- US-A- 3 168 341
- US-A- 3 913 880
- US-A- 4 159 093

## Description

The present invention relates to a fixture, in particular, with a swiveling arm for a support system to mount a medical or salon-technical device.

A multitude of tripod stands, ceiling mounts, and wall systems are well known to which medical devices, for example, supply stations or salon-technical devices, e.g. drying hoods or infrared radiation devices, are mounted. In many cases, a swiveling arm is used to swivel the device to a specific location. Essentially, this type of device comprises a holding part and a mounting part mounted on the holding part. The holding part is connected to a stationary support, in particular, a tripod stand leg of a ceiling mount or a wall mount. The mounting part is rotatably connected to the holding part, which holds the device. The device places a load on the mounting part and therefore the holding part.

This may result in the connection between the holding part and the mounting part becoming damaged due to long-term use, meaning that the holding part comes loose from the mounting part. In order to prevent an accident or damage to the device in such a case, it is typical to provide a securing mechanism to secure the mounting part with respect to the holding part.

It is known from EP 1 283 969 that the securing mechanism has a screw with a screw head, and the screw extends into the holding part to support the securing mechanism.

The known fixture has the disadvantage in that the securing mechanism increases friction of the fixture if the holding part is rotated relative to the mounting part.

Thus, an object of the present invention is to provide a solution for this disadvantage.

The present invention provides a fixture, in particular with a swiveling arm, for a support system to mount a medical or salon-technical device as defined in Claim 1. Preferred features of the invention are recited in the dependent claims.

According to the invention, the screw is screwed into the holding part or the mounting part. The screw head projects into a groove of a bushing of the other part, that is, of the mounting part or the holding part. In this process, the screw head can move freely in the groove with a relative rotation between the holding part and the mounting part. The groove is bordered by an upper surface against which the screw head impacts if the connection between the holding part and the mounting part fails.

The suggested fixture has the advantage that the securing mechanism does not disturb the movements of the fixture if there is a functional connection, because the screw head can move back and forth freely in the groove. The holding part is not held by the screw head at the mounting part until there is a failure in the connection, when the holding part lowers with respect to the mounting part. Thus, when the holding part is rotated relative to the mounting part, the fixture becomes difficult to move, because the screw head supports the device, and the device places a load on the screw head via the upper surface of the groove. The surface moves with a great amount of friction via the screw head. In this process, the thread of the screw is not stressed to any great extent. The person using the fixture notices the connection failure/joint failure due to the fixture's lack of ease in movement and due to the visible gap, which is caused by the resulting travel movement between the holding part and the mounting part.

The term screw should be understood within the scope of its technical equivalents. A bolt, a pin, a rivet, or other miscellaneous retaining elements will also fulfill the function of a screw with thread even if one of such retaining elements does not have a thread. An end of the retaining element that projects outwards corresponds to the screw head. An MLF screw is particularly suitable.

The screw can be mounted via a slot bordering the groove, whereby the screw can be screwed into an inner thread or a retaining element is partially inserted into a drilled hole.

If there is a securing ring in a holder of the holding part, upon which the bushing of the mounting part is supported, then the bushing slipping downwards after the securing ring fails can be held by the screw head.

If the screw head has a wedge-shaped edge, then the screw head is wedged on the surface of the groove when the securing mechanism is used. It can then be concluded that a particularly great amount of difficulty in moving the fixture means there is damage to the fixture.

The invention is described in detail below with reference to Figures that show two exemplary embodiments. The following is shown:

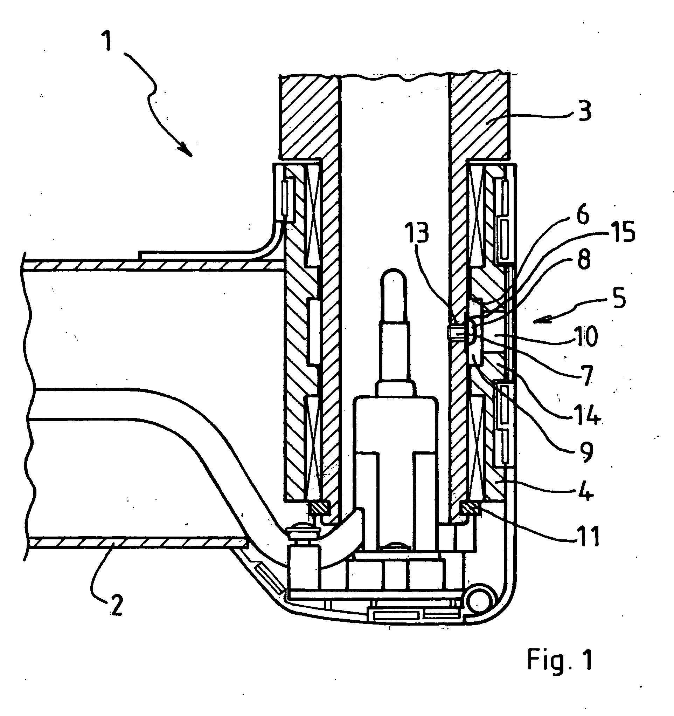

Figure 1, in a vertical section, shows a vertically aligned holding part, upon which a mounting part having a horizontal arm is supported via a securing ring, and wherein a screw head of a screw, screwed into the holding part, can be moved in a groove cut into the mounting part when the arm is swiveled;

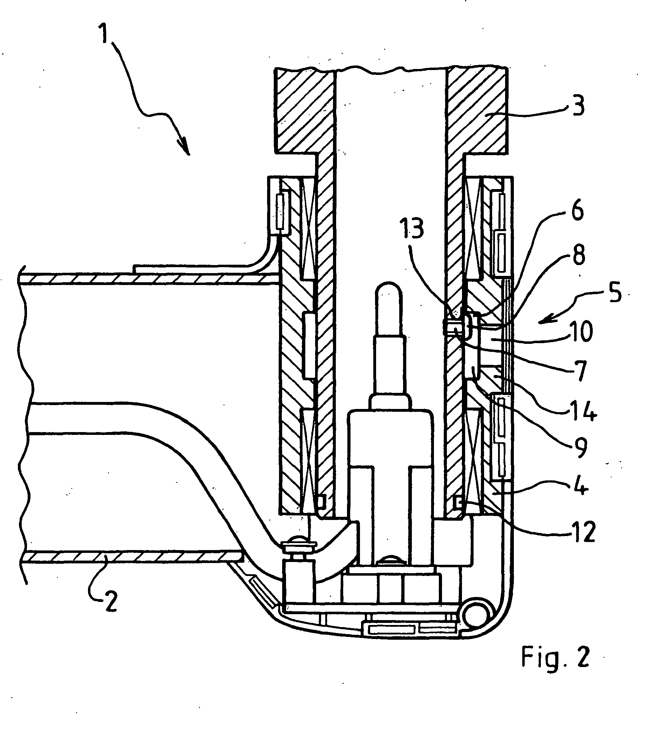

Figure 2, in a vertical section, shows the object of Figure 1, however, with a failed securing ring, a piece on the holding part with the mounting part slipping downwards together with the arm, and with a screw head impacting the upper, horizontally aligned surface of the groove, with said head being part of a securing mechanism, as well as

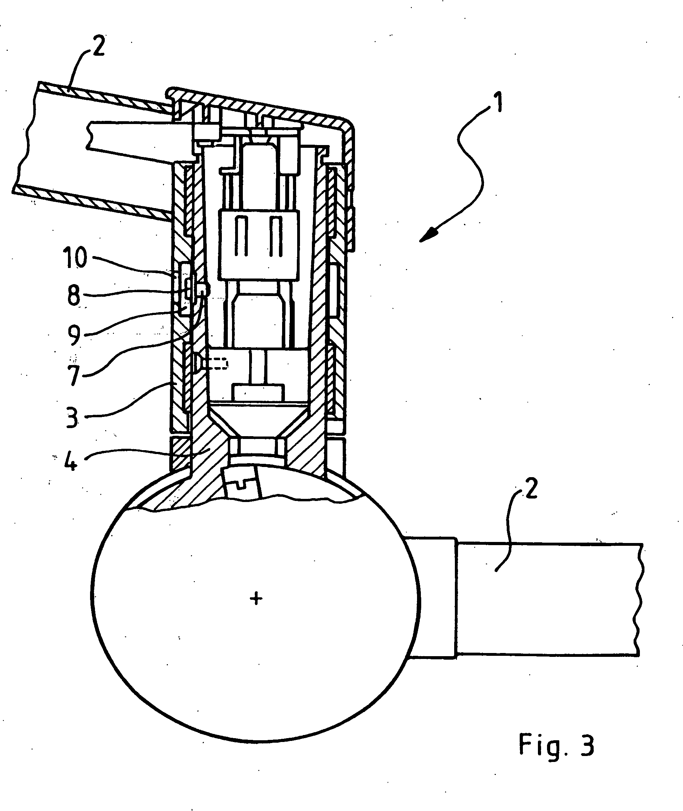

Figure 3, in a vertical section, shows another mounting part on another holding part, wherein a screw is also provided for securing the mounting part on the holding part, however, the screw is screwed-in in the mounting part, and the screw head projects into a groove of the holding part.

With a fixture 1 with a swiveling arm 2 of a support system to mount a medical device, a holding part 3 with a ceiling mount and a mounting part 4 are rotatably connected to the holding part 3 (Figure 1). The (not shown) device places a load on the mounting part 4 and thus the holding part 3. A securing mechanism 5 is used to secure the mounting part 4 on the holding part 3. The securing mechanism 5 has a screw 7 with a screw head 8. The screw 7 engages with the inner thread 13 of the holding part 3 and, in this manner, is screwed into the mounting part 4. The screw head 8 projects into a groove 9 of a bushing 14 of the mounting part 4. The screw head 8 can therefore move freely in the groove 9 when the mounting part 4 is rotated around the holding part 3. The groove 9 is bordered by a horizontally aligned surface 6. A slot 10 is used to insert the screw 7.

Acting as a connection between the holding part 3 and the mounting part 4, a securing ring 11 in a holder 12 of the holding part 3, upon which the bushing 14 of the mounting part 4 and therefore the mounting part 4 together with the arm 2 are supported, is provided.

If the securing ring 11 fails after the fixture 1 has been used for a long period of time, and it falls out (Figure 2), then the mounting part along with the arm 2 slips downwards a few millimeters along the holding part 3. However, this does not result in the mounting part 4 coming loose from the holding part 3, because the screw 7, as a part of the securing mechanism 5, prevents this. Thus, the surface 6 impacts the screw head 8 during this slippage downwards. Said screw head has a line-shaped, wedge-type tapered edge 15, which digs into the surface 6 or places itself between the surface 6 and the holding part 3. This results in difficulty of movement when the arm is rotated whereby the occurred damage is noticed.

The art is similar in the second embodiment example (Figure 3). The holding part 3 and the mounting part 4, however, connect two arms 2, which are linked together with a joint, with each arm swiveling in a horizontal plane. Contrary to the first embodiment example, the screw 7 is screwed into the mounting part 4, and the screw head 8 can be moved in a groove 9 of the holding part 3. Should the connection between the holding part 3 and the mounting part 4 become loose, the screw 7 secures the fixture 1 precisely as described in the first embodiment example.
- 1: Fixture
- 2: Arm
- 3: Holding part
- 4: Mounting part
- 5: Securing mechanism
- 6: Surface
- 7: Screw
- 8: Screw head
- 9: Groove
- 10: Slot
- 11: Securing ring
- 12: Holder
- 13: Inner thread
- 14: Bushing
- 15: Edge

## Claims

1. A fixture (1), particularly with a swiveling arm (2), for a support system to secure, in particular, a medical or salon-technical device, the fixture comprising:
a holding part (3) adapted to be connected to a stationary support, in particular, a ceiling mount or a wall mount;
a mounting part (4) mounted on the holding part (3), wherein the mounting part (4) is rotatably connected to the holding part (3), and wherein, in use, the device places a load on the mounting part (4) and therefore on the holding part (3); and
a securing mechanism (5) provided to secure the mounting part (4) with respect to the holding part (3), the securing mechanism (5) having a screw (7) with a screw head (8), wherein the screw (7) extends into the holding part (3) and the screw (7) is screwed into the holding part (3) or the mounting part (4),
**characterized in that** the screw head (8) projects into a groove (9) of a bushing (14) of the other of the mounting part (4) or the holding part (3), the groove (9) being bordered by an upper surface (6), and **in that** the screw head (8) can move freely in the groove (9) when there is a relative rotation between the holding part (3) and the mounting part (4).

2. Fixture as recited in Claim 1, wherein a securing ring (11) is provided in a holder (12) of the holding part (3) upon which the bushing (14) of the mounting part (4) is supported.

3. Fixture as recited in Claim 1, wherein the screw head (8) has a wedge-shaped edge (15).

4. Fixture as recited in any one of Claims 1 to 3, wherein a slot (10) bordering the groove (9) is provided for inserting the screw (7) into an inner thread (13) and for tightening.

## Patentansprüche

1. Eine Halterung (1), insbesondere mit einem schwenkbaren Arm (2), für ein Auflagerungssystem zum Montieren insbesondere einer medizinischen oder salontechnischen Vorrichtung, wobei die Halterung umfasst:
einen stützenden Teil (3), der dazu geeignet ist, mit einer ortsfesten Abstützung, insbesondere mit einer Decken- oder Wandbefestigung, verbunden zu werden;
einen aufhängenden Teil (4), der an den stützenden Teil (3) angebracht ist, wobei der aufhängende Teil (4) drehbar mit dem stützenden Teil (3) verbunden ist, und wobei die Vorrichtung im Einsatz eine Last auf den aufhängenden Teil (4) und damit auf den stützenden Teil (3) ausübt; und
einen Sicherungsmechanismus (5), der vorgesehen ist, um den aufhängenden Teil (4) mit Bezug auf den stützenden Teil (3) abzusichern, welcher Sicherungsmechanismus (5) eine Schraube (7) mit einem Schraubenkopf (8) aufweist, wobei die Schraube (7) in den stützenden Teil (3) hineinragt und die Schraube (7) in den stützenden Teil (3) oder den aufhängenden Teil (4) eingeschraubt ist,
**dadurch gekennzeichnet, dass** der Schraubenkopf (8) in eine Ausnehmung (9) einer Buchse (14) des anderen des aufhängenden Teils (4) oder des stützenden Teils (3) hineinragt, die Ausnehmung (9) von einer oberen Fläche (6) begrenzt ist, und dass der Schraubenkopf (8) frei beweglich in der Ausnehmung (9) ist, wenn es eine relative Drehung zwischen dem stützenden Teil (3) und dem aufhängenden Teil (4) gibt.

2. Halterung nach Anspruch 1, wobei eine Halteschelle (11) in einem Halter (12) des stützenden Teils (3) vorgesehen ist, auf der die Buchse (14) des aufhängenden Teils (4) gestützt ist.

3. Halterung nach Anspruch 1, wobei der Schraubenkopf (8) einen keilförmigen Umfang hat.

4. Halterung nach einem der hervorgehenden Ansprüche 1 bis 3, wobei eine an der Ausnehmung (9) angrenzende Aussparung (10) vorgesehen ist, zur Einführung der Schraube (7) in ein inneres Gewinde (13) und zum Festschrauben.

## Revendications

1. Dispositif de fixation (1), en particulier muni d'un bras pivotant (2), pour un système de support destiné à fixer, en particulier, un dispositif médical ou un dispositif technique de salon, le dispositif de fixation comportant :
une partie de retenue (3) adaptée pour être reliée à un support fixe, en particulier, un support plafonnier ou un support mural,
une partie de montage (4) montée sur la partie de retenue (3), dans lequel la partie de montage (4) est reliée à la partie de retenue (3) de manière à pouvoir tourner, et dans lequel, en utilisation, le dispositif place une charge sur la partie de montage (4) et donc sur la partie de retenue (3), et
un mécanisme de fixation (5) agencé pour fixer la partie de montage (4) par rapport à la partie de retenue (3), le mécanisme de fixation (5) ayant une vis (7) munie d'une tête de vis (8), dans lequel la vis (7) s'étend dans la partie de retenue (3) et la vis (7) est vissée dans la partie de retenue (3) ou la partie de montage (4),
**caractérisé en ce que** la tête de vis (8) fait saillie dans une gorge (9) d'une douille (14) de l'autre parmi la partie de montage (4) ou la partie de retenue (3), la gorge (9) étant bordée par une surface supérieure (6), et **en ce que** la tête de vis (8) peut se déplacer librement dans la gorge (9) lorsqu'il y a une rotation relative entre la partie de retenue (3) et la partie de montage (4).

2. Dispositif de fixation selon la revendication 1, dans lequel une bague de fixation (11) est agencée dans un support (12) de la partie de retenue (3) sur laquelle la douille (14) de la partie de montage (14) est supportée.

3. Dispositif de fixation selon la revendication 1, dans lequel la tête de vis (8) a un bord en forme de coin (15).

4. Dispositif de fixation selon l'une quelconque des revendications 1 à 3, dans lequel une fente (10) bordant la gorge (9) permet d'insérer la vis (7) dans un filetage intérieur (13) et de la serrer.
